# EUROPEAN PATENT SPECIFICATION

(11) **EP 1 601 526 B1**
(45) Date of publication and mention of the grant of the patent: **04.03.2009**
(21) Application number: 04705744.3
(22) Date of filing: 28.01.2004
(51) Int. Cl.: B32B 3/30, E04D 12/00

(54) **MULTILAYER SLIP RESISTANT SHEET MATERIAL**
MEHRLAGIGES RUTSCHFESTES FOLIENMATERIAL
MATERIAU EN FEUILLES ANTIDERAPANT A COUCHES MULTIPLES

(30) Priority: 05.02.2003 CA 2418498; 19.03.2003 US 390757
(43) Date of publication of application: 07.12.2005
(73) Proprietor: IBCO SRL, Brittons Hill 14027 Saint Michael (BB)
(72) Inventor: DI PEDE, Sandro, Toronto, Ontario M3H 3Y7 (CA)
(74) Representative: Hitchcock, Esmond Antony
(86) International application number: PCT/CA2004/000113
(87) International publication number: WO 2004/069531

(56) References cited:
- US-A- 4 276 342
- US-A- 5 687 617

## Description

The invention relates to sheet materials. In particular, the invention relates to sheet materials for use as roofing underlayments, industrial wrapping materials or fabrics.

In both residential and commercial roofing applications, a primary roof covering material provides the main water protection barrier. Whether the primary covering is composition shingles, metal, panels or shingles, concrete or clay tiles, wood shakes, or slate, it is the function of the primary roofing material to protect the building interior from water ingress.

In some circumstances, whether due to primary roofing material design, installation practices, or accidental breach of the primary roofing material, water can penetrate the primary roofing material. To protect the building interior in these circumstances, it is common to use a secondary water shedding device called a roofing underlayment which acts as a temporary water shedding device.

A variety of roofing underlayment products are commonly used. The two major classes are mechanically attached and self-adhered underlayments, the latter commonly referred to as "peel and stick".

It is desirable that a roofing underlayment provide a surface which has a sufficiently high coefficient of friction ("COF") to be safe for an applicator to walk upon. The phrase "high coefficient of friction" in this document means a static coefficient of friction of at least 0.8 or a dynamic coefficient of friction of at least 0.8. Underlayments should be easily affixable to a roofing surface, for example by nailing or adhesion. They should ideally be impermeable to moisture. High tensile and tear strengths are also desirable to reduce tearing during application and exposure to high winds. Underlayments should be light in weight to facilitate ease of transport and application, and should be able to withstand prolonged exposure to sunlight, air and water.

A common mechanically attached roofing underlayment product used in the United States and Europe is bituminous asphalt-based felt, commonly referred to as felt. Typically, this is comprised of organic paper felt saturated with asphaltic resins to produce a continuous sheeting material which is processed into short rolls for application.

Such felts generally demonstrate good resistance to water ingress and good walkability in dry and wet roof conditions. Disadvantages include very low tensile and tear strengths, relatively high weight per unit surface area, a propensity to dry and crack over time, extreme lack of resistance to ultraviolet ("UV") exposure, high likelihood of wind blow off, and a propensity to absorb water causing buckling and wrinkling, thus preventing the application of direct primary roofing materials such as composition shingles.

As felts have very low tensile and tear strengths, their use is generally confined to roofing applications where the roofing underlayment is attached directly to a solid, continuous roofing deck, rather than in spaced sheathing applications where open spaces characterize the roof structure. Use of felts in spaced sheathing roofs would endanger the applicator should the applicator walk over a section of the roof structure covered only by felt.

In climatic regions where ice damming or prolonged exposure to water is prevalent, it is common to employ thick rubberized asphalt-based underlayments in the valleys, eaves, and seams of the roof. These underlayments are generally applied not by mechanical means, but by adhesives exposed by removing release liners from the bottom surface of the underlayment.

In Europe, it is common in roofing design to utilize spaced sheathing rather than solid decking prior to application of the primary roof covering materials. To address the safety issue of an applicator falling through rafters, several products have been marketed with high tensile and tear strengths which are specifically designed to prevent applicator breach during application.

These materials are generally reinforced membranes such as woven hybrids with other laminates or coatings, or reinforced non-woven polymeric synthetic materials, rather than asphaltic felts. They are generally lightweight, thin, have high tensile, tear and burst strengths, and are superior to felts in UV resistance and resistance to drying and cracking over time.

The major drawback of such underlayments is their low COF on the walking surface in dry or wet conditions. This problem limits the commercial attractiveness of such products in high pitch roofs or in climates characterized by frequent and sporadic wet or humid conditions. It has limited these products to spaced sheathing applications where safety and tensile strength are more important than walkability.

In many markets, such as the US and Canada, building design is characterized by roofing structures possessing solid decking substrates onto which is applied roofing underlayment and, ultimately, the primary roofing material. As the decking surface provides a safe walking medium for the roof applicator, underlayment walkability, that is, the ability to permit applicators to walk upon the underlayment without slipping, becomes more important than tensile strength. Any roofing underlayment which does not provide walking safety under dry and wet conditions will be unsafe for use without special precautions, and will be severely limited in commercial market penetration.

Such underlayments include RoofGuard^{™} and RoofTOPGuard II^{™} produced by Rosenlew of Finland. These are produced using woven tape technology as a reinforcement, and are 2-sided polymer coated for encapsulating the porous woven substructure. RoofGuard™ utilizes smooth, high COF polymers to improve walkability in dry conditions. However, it suffers dramatic reduction in COF in wet conditions.

In RoofTOPGuard II^{™}, the walking surface has been replaced by a polypropylene spun bond non-woven layer. This surface provides a slight improvement in walkability in some wet surface conditions. However, it does not provide safety in highly pitched roofs and very wet conditions. The non-woven material also has a tendency to peal or suffer surface fiber tears under foot load, and does not readily absorb or displace water when walked upon. Therefore, this product is limited in its ability to compete with felt roofing underlayments under wet conditions.

TRIFLEX 30™, produced by Flexia Corporation of Canada is of spun bond polypropylene construction, with a polypropylene layer coating both sides. The surface is relatively smooth and void of any surface texture properties which would provide high COF properties under wet or dusty conditions.

US 4,276,342, over which the independent claims are characterised, discloses a sheet material comprising two layers of reinforcing strands that extend orthogonally relative to each other and are connected by a continuous sheet of tar material produced by dipping or spraying.

There are other examples of underlayment products, notably in the self-adhered or "peel and stick" bituminous membrane market, which possess various surface designs aimed at improving walkability under wet conditions. Grace Construction Products produces various rubberized asphalt self-adhered products, including Select^{™} and Ultra^{™}, having either a grainy polymer film laminate surface or an embossed polymer adhesive pattern as a surface layer. Neither product, however, works well under wet or dusty conditions.

Polyglass produces Polystick P™ and Polystick MU™ self- ' adhered underlayment with polymer corrugated film laminated and non-woven fabric surfaces. Neither of these products works very well in wet conditions, as there is no mechanism to generate high normal and shear forces under walking load to resist slippage.

Additional mechanical and self-adhering membrane roofing underlayment products are shown in Table 1, in which "M" refers to mechanically applied underlayments and "SA" to self-adhered underlayments. All of the abovementioned materials, as well as all materials in Table 1, were tested in simulated test roof pitches ranging from a 4:12 pitch (a vertical rise of 4 units over a horizontal distance of 12 units) to a 12:12 pitch under extremely wet surface conditions. All materials were found to possess surfaces that become highly slippery and unsafe to walk upon when coated with water.

**Table 1 - Roofing underlayment products**

| Supplier | Type | Trade Name | Surface Layer Type |
|---|---|---|---|
| MFM Building Products | SA | Ice Buster^{™} | silver, embossed polymer film |
| MFM Building Products | SA | Wind & Water Seal^{™} | black, grainy polymer film |
| TAMKO | SA | TW Tile and Metal^{™} | blistered surfaced film |
| Miradri | SA | WIP 200^{™} | black, embossed polymer film |
| Lafarge | M | Divoroll Top^{™} | black, non woven fibers |
| Dupont | M | Tyvek Solid^{™} | white, tan, pitted spun bonded |
| Daltex | M | RoofShield^{™} | grey, embossed non woven fibers |

Wiercinski, in US patent number 5,687,517, describes a roofing underlayment with corrugated ridges in the machine direction to achieve slip resistance in installation on a sloped roof. The surface layer is comprised of oriented, corrugated film laminated onto substrate. These ridges are comprised of polymer materials having a low COF under dry or wet conditions. These ridges do not provide sufficient shear and normal force resistance under loading, as the individual ridges lack rigidity and bend over. Such an underlayment does not function well under wet conditions.

Strait, in US patent number 6,308,482, describes a reinforced roofing underlayment with a tensile strength sufficient to resist tearing when exposed to tensile loads from various directions. He further discloses provision of a slip resistive polypropylene sheet on the outer surface of the roofing underlayment.

Neither of the above patents discloses satisfactory slip resistance under wet, humid or dusty conditions at high roof pitches between 4:12 and 12:12. Neither discloses an invention in which the bottom layer is resistant to slippage between the underlayment and the deck during installation, nor do they combine high tensile strength and slip resistance on both sides of the underlayment.

One method in the prior art of achieving a high COF under wet conditions is by embedding extremely hard, granular, inorganic particles into the surface of asphalt bituminous underlayments.

Polymer underlayments are produced by various forms of polymeric extrusion, lamination, or thermal calendaring. In extrusion coating methods, it is normal to use specially surfaced chilling rolls to quench the molten polymer to solidify the product and reduce thermal damage of the reinforcement. The use of hard inorganic particles would severely damage processing equipment, and also significantly increase the mass per unit area of the resulting underlayment, limiting the advantages inherent in lightweight synthetic, polymer underlayments.

Adding hard particles to the throat of an extruder to produce granular coatings would not be feasible as it would damage the processing equipment. Particles would be unable to pass through normal filtration media or narrow die slits. Furthermore, adhesion between inorganic particles and thin thermoplastic coatings is generally very poor, permitting the particles to dislodge from the underlayment surface.

The use of specialty inorganic particle coatings could improve bonding to the underlayment surface, but would add technical complexity and cost. Also, hard inorganic particles may tear and gouge the relatively soft surface layers of the polymer underlayment if freed from the surface and walked upon, thereby permitting water penetration of the underlayment.

The present invention is directed at a sheet material having a flexible structural layer and a mesh layer laminated to the structural layer. According to the invention, the mesh layer has interconnecting strands and protruding nodes at the junctions of the strands.

Sheet material of the invention may have a lamination layer laminated between the structural layer and the mesh layer, which layer may be made of a polyolefin or a blend of polyolefins. The polyolefin may be a low-density polyethylene or polypropylene. It may be a polymer having a high coefficient of friction (COF).

The mesh layer may be treated with a tacky or high COF coating, which may be ethylene vinyl acetate copolymer.

The structural layer may be made of woven polyolefin tapes or non-woven polyolefin, or woven or non-woven reinforced membrane substrates such as polyethylene terephthalate, nylon or glass.

One or more layers of the sheet material or underlayment may be lightly coloured to reflect solar radiation, thereby reducing heat absorption of radiant energy transfer into the roof attic space. In this document, the term "lightly coloured" means being of a colour which possesses a total solar reflection (ASTM E903-96) of at least 25%. One or more layers of the sheet material or underlayment may be treated to increase UV resistance, thereby allowing extended exposure to the elements without damaging the underlayment. One or more layers may be treated with mold inhibitors to inhibit mold growth on the underlayment and immediate surrounding roof area. One or more layers may be treated with a fire retardant compound to increase fire resistance.

The sheet material may be used as an underlayment, an industrial wrapping material, or a fabric.

The sheet material may have a high COF coating on the lower surface of the structural layer.

In another of its aspects, there is provided a roof underlayment having a mesh layer with interconnected strands and protruding nodes at the junctions of the strands, the mesh layer laminated to a flexible structural layer, and a high COF film laminated to the lower surface of the structural layer. A first lamination layer may be laminated between the mesh layer and the structural layer and a second lamination layer may be laminated between the structural layer and the high COF film.

In yet another aspect, there is provided a roof underlayment having a mesh layer with interconnected strands and protruding nodes at the junctions of the strands, a bituminous rubberized asphalt layer laminated to the mesh layer, an adhesive layer laminated to the lower surface of the asphalt layer and a release liner releasably laminated to the lower surface of the adhesive layer to produce a self-adhering bituminous membrane roofing underlayment possessing a mesh layer surface that is highly walkable in wet conditions.

The sheet material and roof underlayment of the invention have a high COF, good walkability on sloped surfaces and exceptional slip resistance in dry, wet, or dusty conditions.

In another aspect, there is provided a roofing underlayment having a top surface noded mesh layer with a high COF in dry, wet or dusty conditions. The underlayment has a structural layer with high tensile and tear strengths and a bottom surface with a sufficient COF to avoid slippage between the underlayment and the deck to which the underlayment may be applied.

The above and other aspects of the invention will be appreciated by reference to the following description of preferred embodiments given by way of example, in which reference will be made to the accompanying drawings wherein:
Figure 1 is top view of the mesh layer of the invention showing the interlaced strands and nodes of the mesh.
Figure 2 is a cross-sectional view of one embodiment of a roofing underlayment according to the invention.
Figure 3 is a cross-sectional view of a second embodiment of a roofing underlayment showing a structural layer laminated to a slip-resistive film.
Figure 4 is a cross-sectional view of a third embodiment of a roofing underlayment showing a peel and stick treatment.
Figure 5 is a cross-sectional view of a fourth embodiment of a roofing underlayment showing a self-adhered bituminous rubberized asphalt layer.

The invention provides a polymeric multi-layer sheet material that provides a high COF in dry, wet or dusty surface conditions. The sheet material may be used for a variety of applications, including as a roofing underlayment, as an industrial wrapping material, and as a fabric. The high COF is achieved through the use of a noded mesh material, laminated to the walking surface of a structural layer or rubberized asphalt, such that the mesh provides a secure surface for walking even under dusty or wet conditions. In this document, the term "laminated" means fixedly connected surface to surface in a layered relationship.

The sheet material of the present invention is characterized by a structural layer having high tensile and tear strengths, coated with thermoplastic resins. A mesh possessing nodular characteristics and preferably coated on both sides with a tacky coating to provide an enhanced lamination to the structural layer and a high COF in dry, wet or dusty conditions, is laminated to the upper surface, and becomes the walking surface in underlayment applications. The mesh may be manufactured of plastic, metal glass or other materials.

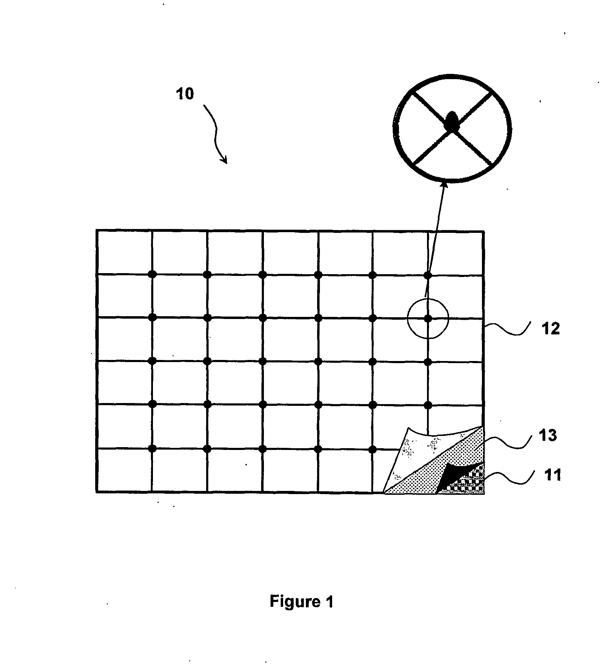

Referring to figure **1****,** the multilayer slip resistant sheet material **10** has a noded mesh layer **12** having interconnected strands and protruding nodes at the junctions of the strands. Preferably, the nodes are significantly thicker than the strands, thus providing the key nodular characteristics. The mesh layer may be laminated by a synthetic resin lamination layer **13** to a structural layer **11.** Alternatively, the mesh layer may be laminated directly to the structural layer, for example by existing means of thermal bonding using heat and pressure. The structural layer is preferably a woven or non-woven scrim of synthetic polymer resin, but other materials are possible.

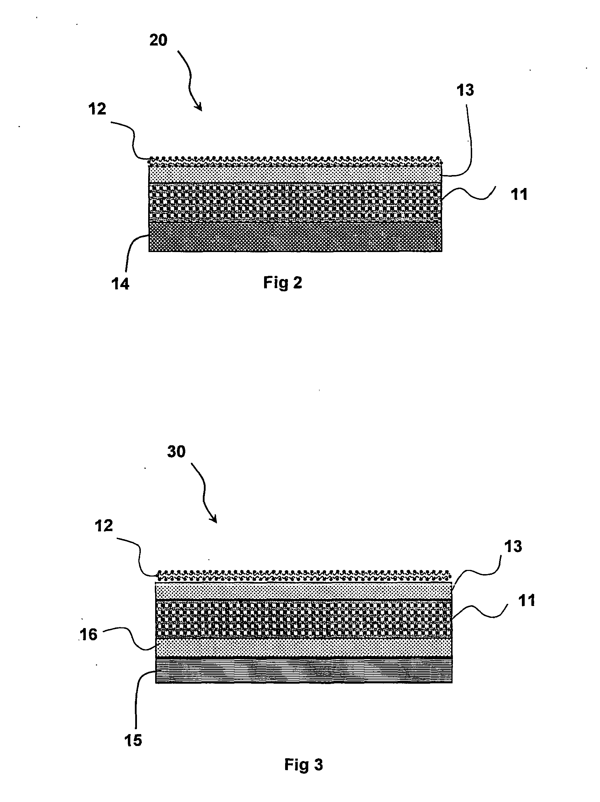

The sheet material may be used in a roofing underlayment. Referring now to figure **2****,** a roofing underlayment **20** has a structural layer **11,** preferably a woven scrim made of synthetic polymer resin tapes, to provide tensile strength. The polyolefin tapes forming the scrim are fabricated by methods well known in the art: Typically, the scrim of the structural layer would have 8-64 tapes per decimeter (4-16 tapes per inch) in the machine direction and 8-64 tapes per decimeter (2-16 tapes per inch) in the cross direction. The machine direction is the linear direction in which the sheet material is manufactured. Other scrim construction parameters are also possible without departing from the scope of the invention.

A mesh layer **12** is laminated to the upper surface of the structural layer by a synthetic lamination layer **13.** The mesh layer **12** has nodes protruding from its upper surface, and may be treated with a tacky coating such as ethyl vinyl acetate copolymer ("EVA") which provides an improved COF to the surface.

The lamination layer **13** may comprise a tacky polymer or a blend of tacky polymers. Such tacky polymers should have a high COF and may comprise low-density polyethylene, polypropylene or another copolymer polyolefin. The underlayment **20** also may be coated on its lower surface with a tacky non-slip polymeric resin coating **14.** Both the lamination layer **13** and the coating **14** provide a membrane to prevent moisture passing through the sheet material. One or more of the layers may be treated with additives to increase UV resistance, retard fire, reduce heat absorption or reduce mold creation.

Alternatively, the mesh layer may be laminated to the structural layer by other means, including thermal calendaring or application of infrared or microwave energy. In these embodiments, no lamination layer is necessary.

The unusually high COF of the walking surface in wet conditions is achieved by a combination of oriented, stiff, laminated mesh strands having high tensile and shear strengths, and a unique high COF polymer coated nodular surface on the mesh material. Water and dust covering the underlayment surface predominantly reside in the spaces between nodes and strands, and not on the nodes. As water and dust accumulate, they will flow over the strands and reside in the spacing pockets between the strands without covering the nodes.

A roofing installer walking on the noded mesh surface will transmit the walking load primarily onto the nodes, which are generally free of water and dust. The high strength, oriented nodes have very high normal and shear force resistance in all directions, therefore a high COF results under various walking scenarios of pitch, angle and load.

While the mesh layer nodes possess a high COF even in dry conditions, a polymer surface coating such as EVA copolymer may be applied to the mesh to increase the COF. An example of such a coated mesh is Thermanet^{™}, produced by Conwed Plastics^{™} of Minneapolis. The mesh layer may be coated on both sides with EVA, which will reduce the incidence of delamination of the mesh layer from the structural layer.

The mesh design (nodes/unit area), mesh polymer type, and node shape, size and weight may be selected to optimize foot traction and coating layer securement. If the node density is too high, the surface may become effectively smooth, and may not provide slip resistance. If the node density is too low, the mesh may not provide sufficient traction under wet characteristics.

The structural layer may comprise woven tapes of polyolefin such as polyethylene or polypropylene, or woven reinforced membrane substrates such as polyethylene terephthalate, nylon or glass. Alternatively, the structural layer may comprise non-woven polyolefins such as spun bond polyolefin, or non-woven reinforced membrane substrates such as polyethylene terephthalate, nylon or glass. Other materials are also possible.

The use of a nodular mesh material provides the benefits of hard, rigid inorganic particles under wet conditions, but is more compatible with polymer underlayment manufacturing processes than is addition of inorganic particle coatings. The strands and nodes together provide a traction mechanism, with the strands providing reinforcement to the nodes. The use of nodes without strands would be undesirable as such stand alone nodes would be vulnerable to shearing off unless extremely high adhesion forces were present.

Referring to figure **3****,** roofing underlayment **30** has a mesh layer **12** laminated to the upper surface of a structural layer **11.** A high COF film **15** is laminated by a first lamination layer **16** to the lower surface of the structural layer. The high COF film may comprise EVA. The mesh layer is laminated to the structural layer by a second lamination layer **13.**

As wet conditions generally are not found on the deck side of the underlayment, it is not necessary to laminate the mesh layer to the bottom surface of the underlayment. Sufficient COF between the underlayment and the deck may be achieved by application of tacky coatings such as EVA to the lower surface of the underlayment. It is advantageous to provide a high COF between underlayment bottom and the deck surface, as applicators are likely to walk over the underlayment before it is secured. Any slippage between underlayment and deck may cause accidents. The use of coatings such as EVA, increases the COF between the deck and the bottom of the underlayment to render the underlayment secure until the underlayment is fully secured by roofing nails or staples.

One or more of the layers of the sheet material may be lightly coloured to provide reflection of solar radiation. This provides the sheet material with less heat absorption, which results in a cooler roof, lower attic temperatures, and a cooler working surface for applicators. The sheet material is lightweight for faster installation and lower volume to inventory and handle.

An example of the invention claimed herein is a synthetic roofing underlayment, comprised of a woven tape structural layer of polyethylene or polypropylene, extrusion coated with low-density polypropylene on the top surface, and a thermoplastic noded mesh material coated on both sides by EVA such as that supplied by Conwed Plastics Thermanet^{™} 750012-018 simultaneously laminated onto the top surface of the structural layer. The oriented strands are typically approximately 0.15 mm (0.006 inches) in thickness, whereas the node junctions are approximately 0.5 mm (0.02 inches) in thickness, thus providing a nodular characteristic for enhanced shear load bearing. The bottom surface of the underlayment is coated with EVA by direct extrusion, or lamination of an EVA film by thermal bonding or coating. EVA grades are preferably 5-20% EVA comonomer, such as Dupont Elvax^{™} or similar resins imparting a static or dynamic COF near 1.0. The woven structural layer provides high strength and light weight for ease of application, and resistance to tearing and wind blow off. The underlayment is free of buckling and wrinkling characteristic common in organic asphalt felts.

The structural layer, lamination layer, coatings, and mesh layer may be treated with UV stabilizers to provide for exposure resistance during applications where the underlayment has been installed to dry-in the roof, but application of the primary roofing material is delayed. This scenario is very common in tile and metal roofing applications. One or more layers may be treated with a mold inhibitor or fire retardant additive.

The noded surface of the present invention enables its use in a variety of applications where safe walkability in extreme conditions or on pitched surfaces is required.

Further, the inner surface of this product can be treated with adhesives backed by a release liner that protects the adhesive and prevents the product from sticking to itself. During application, the release liner is easily removed to aid in positioning of sheets and to maintain proper line, allowing the product to stick to the installation surface and eliminating the need for mechanical fasteners which puncture the underlayment, thereby generating opportunities for water penetration.

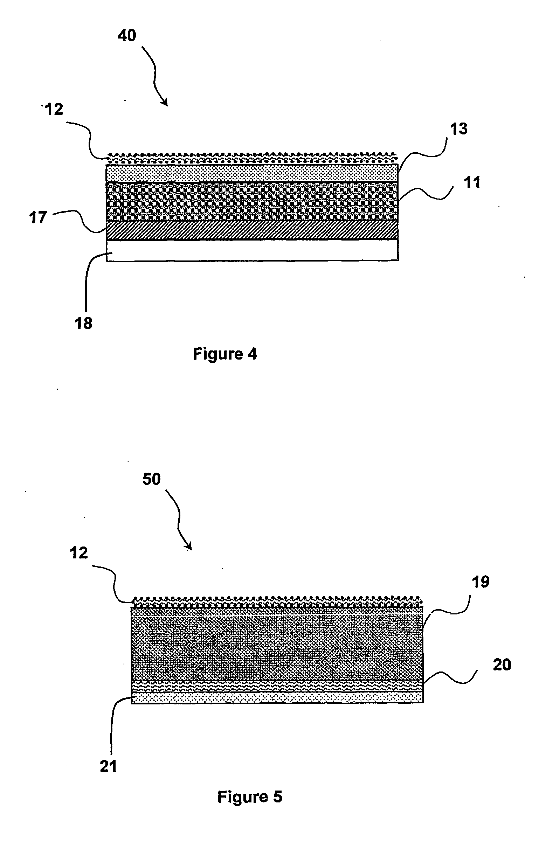

Referring to figure **4****,** in roofing underlayment **40,** a mesh layer **12** is laminated by a synthetic lamination layer **13** to the top surface of the structural layer **11.** The bottom surface of the structural layer **11** is coated with a thin adhesive layer **17** which is laminated to a removable release liner **18.**

An alternate embodiment provides a mesh layer laminated to molten rubberized asphalt to produce a self-adhering underlayment exhibiting good walkability under wet conditions. Typically, a polymer such as Kraton^{™} (Shell Chemicals) rubber is emulsified within an asphalt matrix to produce a highly elastic core sealing membrane layer which is laminated to an outer film surface, and the bottom surface is coated with an adhesive to which is laminated to a release liner.

Referring to figure **5****,** in underlayment **50** a mesh layer **12** is laminated to the upper surface of a bituminous rubberized asphalt layer **19** 1.6 to 2.4 mm (40 to 60 mils) thick. The lower surface of the asphalt layer is coated with a thin layer of adhesive **20,** which is laminated to a removable release liner **21.** Underlayments having an adhesive layer and release paper are commonly known as "peel and stick" underlayments.

The roofing underlayment of the present invention has high tensile and tear strengths, exhibits a high COF in dry, wet or dusty conditions, and is lightweight, permitting fast installation and reducing the number of rolls of underlayment to inventory and handle.

The synthetic polymer construction of the present invention is free from wrinkling and buckling caused by water absorption. Such water effects are common with asphalt felts, and can interfere with primary roof covering installation.

The sheet material of the present invention has been evaluated as a roofing underlayment and passed by an external lab in accordance with International Conference of Building Officials Evaluation Services ("ICBO-ES") Acceptance Criteria for AC 188 & AC 48 (including section 4.7 accelerated aging and section 4.8 ultraviolet exposure), ASTM D226 (pliability), ASTM D1970 (tensile testing and nail sealability penetration), and ASTM D4869 (liquid water transmission).

Several field application tests were conducted with various roofing underlayment samples attached to solid decking roofing substrates to simulate dry and wet conditions under various roof pitches. The results of these tests demonstrated the vastly superior walkability properties of the proposed mesh-surfaced invention product over the above mentioned "smooth" underlayments.

For example, in one test the mesh-surfaced invention comprising a woven polyethylene structural layer with an EVA film laminated to the bottom surface and a ConWed^{™} 2-sided EVA Thermanet^{™} mesh layer laminated to the top walking surface was attached to a roof pitch of 8:12. Alongside this material was attached the same structural layer having merely a smooth EVA film walking surface.

Water was poured from above equally onto both materials to provide a wet surface simulation. Subsequently, various roofing professionals with various shoe types, and with proper safety precautions, proceeded to attempt to walk upwards on these wet surfaces. Only on the mesh covered woven underlayment sample was it possible to walk repeatedly up and down the pitch under wet conditions. For the smooth surfaced sample, immediate slippage resulted.

In an attempt to provide a more scientifically-based and standardized measurement of walkability, the COF of the invention and various other roofing underlayments was tested utilizing a customized COF test method that simulates roof walking physics.

During the tests, the COF of the roof underlayment of the invention was tested relative to three competing underlayments: 30# felt, Triflex 30™ and RoofTopGuard II™, using an NBS-Sigler™ Pendulum Impact Tester according to Federal Test Standards NBS7121 and NBS501. The underlayments were tested under dry and wet conditions on a flat surface, a pitch of 18.4 degrees, and a pitch of 45 degrees.

Result of COF tests performed on the mesh surface sheet material against products that have common application is provided in Tables 2 and 3 below.

**Table 2 - Comparative improvement in COF under dry conditions**

| **Test Condition** | **COF Improvement Mesh Surface vs. 30# felt** | **COF Improvement Mesh Surface vs. Triflex 30^{™}** | **COF Improvement Mesh Surface vs. RoofTopGuard II^{™}** |
|---|---|---|---|
| **COF dry Flat** | 16% | 8% | 14% |
| **COF dry 4/12 pitch** | 17% | 9% | 15% |
| **COF dry 12/12 pitch** | 15% | 10% | 21% |

**Table 3 - Comparative improvement in COF under wet conditions**

| **Test Condition** | **COF Improvement Mesh Surface vs. 30# felt** | **COF Improvement Mesh Surface vs. Triflex 30^{™}** | **COF Improvement Mesh Surface vs. RoofTopGuard II^{™}** |
|---|---|---|---|
| **COF wet Flat** | 24% | 44% | 18% |
| **COF wet 4/12 pitch** | 23% | 43% | 16% |
| **COF wet 12/12 pitch** | 23% | 39% | 14% |

## Claims

1. A sheet material comprising a mesh layer (12) laminated to a flexible structural layer (11)
**CHARACTERIZED IN THAT**
the mesh layer has interconnecting strands and protruding nodes at the junctions of the strands.

2. A sheet material as claimed in Claim 1 further comprising a lamination layer (13) laminated between the structural layer and the mesh layer.

3. A sheet material as claimed in Claim 2 wherein the lamination layer (13) comprises a blend of polyolefins, a polymer having a static or dynamic coefficient of friction of at least 0.8, or a polyolefin selected from the group consisting of low-density polyethylene and polypropylene

4. A sheet material as claimed in any preceding Claim wherein the mesh layer (12) is treated with a coating (14) selected from the group consisting of a tacky coating, and ethylene vinyl acetate copolymer.

5. A sheet material as claimed in any preceding Claim wherein one or more of the layers is treated with ultraviolet stabilizers.

6. A sheet material as claimed in any preceding Claim herein the structural layer is selected from the group consisting of woven polyolefin tapes; non-woven polyolefin; spun bond polyolefin; woven reinforced membrane substrate; polyethylene terephthalate, nylon, glass, and non-woven reinforced membrane substrate.

7. A sheet material as claimed in any preceding Claim wherein the nodes protrude from an upper surface of the mesh layer (12).

8. A sheet material as claimed in Claim 1, wherein the sheet material is a roof underlayment further comprising a film (15) having a static or dynamic coefficient of friction of at least 0.8, wherein the film is laminated to the lower surface of the structural layer.

9. A sheet material as claimed in Claim 8 further comprising a first lamination layer (16) laminated between the mesh layer and the structural layer and a second lamination layer (13) laminated between the structural layer and the film (15).

10. A sheet material as claimed in Claim 8 or Claim 9 wherein the film (15) comprises ethyl vinyl acetate copolymer.

11. A roof underlayment comprising a mesh layer (12), a bituminous rubberized asphalt layer (19) laminated to the mesh layer, an adhesive layer (20) laminated to the lower surface of the asphalt layer, and a release liner (18) releasably laminated to the lower surface of the adhesive layer,
**CHARACTERIZED IN THAT**
the mesh layer (12) has interconnected strands and protruding nodes at the junctions of the strands.

12. A roof underlayment as claimed in Claim 11 wherein the nodes protrude from an upper surface of the mesh layer (12).

## Patentansprüche

1. Bahnmaterial, das eine Netzlage (12), die an eine flexible Strukturlage (11) laminiert ist, umfasst,
**dadurch gekennzeichnet dass**
die Netzlage einander verbindende Stränge und vorspringende Knoten an den Verbindungen der Stränge hat.

2. Bahnmaterial nach Anspruch 1, das ferner eine Laminierlage (13), die zwischen die Strukturlage und die Netzlage laminiert ist, umfasst.

3. Bahnmaterial nach Anspruch 2, wobei die Laminierlage (13) eine Mischung von Polyolefinen, ein Polymer, das einen statischen oder dynamischen Reibungskoeffizienten von wenigstens 0,8 hat, oder ein Polyolefin, ausgewählt aus der Gruppe, die aus Polyethylen niedriger Dichte und Polypropylen besteht, umfasst.

4. Bahnmaterial nach einem der vorhergehenden Ansprüche, wobei die Netzlage (12) mit einer Beschichtung (14), ausgewählt aus der Gruppe, die aus einer klebrigen Beschichtung und EthylenVinylacetat-Copolyrner besteht, behandelt ist.

5. Bahnmaterial nach einem der vorhergehenden Ansprüche, wobei eine oder mehrere der Lagen mit Ultraviolett-Stabilisatoren behandelt ist.

6. Bahnmaterial nach einem der vorhergehenden Ansprüche, wobei die Strukturlage aus der Gruppe ausgewählt ist, die aus gewebten Palyolefinbändem, nicht gewebtem Polyolefin, Schmelzspinn-Polyolefin, gewebtem verstärktem Membransubstrat, Polyethylenterephthalat, Nylon, Glas und nicht gewebtem verstärktem Membransubstrat besteht.

7. Bahnmaterial nach einem der vorhergehenden Ansprüche, wobei die Knoten von einer oberen Fläche der Netzlage (12) aus vorspringen.

8. Bahnmaterial nach Anspruch 1, wobei das Bahnmaterial eine Dachunterlage ist, die ferner eine Folie (15), die einen statischen oder dynamischen Reibungskoeffizienten von wenigstens 0,8 hat, umfasst, wobei die Folie an die untere Fläche der Strukturlage laminiert ist.

9. Bahnmaterial nach Anspruch 8, das ferner eine erste Laminierlage (16), die zwischen die Netzlage und die Strukturlage laminiert ist, und eine zweite Laminierlage (13), die zwischen die Strukturlage und die Folie (15) laminiert ist, umfasst.

10. Bahnmaterial nach Anspruch 8 oder Anspruch 9, wobei die Folie (15) Ethyl-Vinylacetat-Copolymer umfasst.

11. Dachunterlage, die eine Netzlage (12), eine bituminöse gummierte Asphaltlage (19), die an die Netzlage laminiert ist, eine Klebstofflage (20), die an die untere Fläche der Asphaltlage laminiert ist, und eine Abziehlage (18), die abziehbar an die untere Fläche der Klebstofflage laminiert ist, umfasst,
**dadurch gekennzeichnet, dass**
die Nctzlagc (12) miteinander verbundene Stränge und vorspringende Knoten an den Verbindungen der Stränge hat.

12. Dachunterlage nach Anspruch 11, wobei die Knoten von einer oberen Fläche der Netzlage (12) aus vorspringen.

## Revendications

1. Matériau en feuille, comprenant une couche de maille (12) appliquée par stratification sur une couche structurale flexible (1) ;
**caractérisé en ce que**
la couche de maille comporte des fils d'interconnexion et des noeuds en saillie au niveau des jonctions des fils.

2. Matériau en feuille selon la revendication 1, comprenant en outre une couche stratifiée (13) appliquée par stratification entre la couche structurale et la couche de maille.

3. Matériau en feuille selon la revendication 2, dans lequel la couche stratifiée (13) comprend un mélange de polyoléfines, un polymère ayant un coefficient de frottement statique ou dynamique d'au moins 0,8, ou une polyoléfine sélectionnée dans le groupe constitué d'un polyéthylène basse densité et d'un polypropylène.

4. Matériau en feuille selon l'une quelconque des revendications précédentes, dans lequel la couche de maille (12) est traitée avec un revêtement (14) sélectionné dans le groupe constitué d'un revêtement collant et d'un copolymère d'éthylène-acétate de vinyle.

5. Matériau en feuille selon l'une quelconque des revendications précédentes, dans lequel une ou plusieurs couches sont traitées avec des agents anti-ultraviolet,

6. Matériau en feuille selon l'une quelconque des revendications précédentes, dans lequel la couche structurale est sélectionnée dans le groupe constitué de bandes de polyoléfine tissée, de polyoléfine non tissée ; de polyoléfine filée-liée ; d'un substrat de membrane renforcée tissée; de téréphtalate de polyéthylène, de nylon, de verre et d'un substrat de membrane renforcée non tissée.

7. Matériau en feuille selon l'une quelconque des revendications précédentes, dans lequel les noeuds débordent d'une surface supérieure de la couche de maille (12).

8. Matériau en feuille selon la revendication 1, dans lequel le matériau en feuille constitue une couche sous-jacente de toiture, comprenant un film (15) ayant un coefficient de frottement statique ou dynamique d'au moins 0,8, le film étant appliqué par stratification sur la surface inférieure de la couche structurale.

9. Matériau en feuille selon la revendication 8, comprenant en outre une première couche stratifiée (16) appliquée par stratification entre la couche de maille et la couche structurale, et une deuxième couche stratifiée (13) appliquée par stratification entre la couche structurale et le film (15).

10. Matériau en feuille selon les revendications 8 ou 9, dans lequel le film (15) comprend un copolymère d'éthyle-acétate de vinyle.

11. Couche sous-jacente de toiture comprenant une couche de maille (12), une couche d'asphalte caoutchoutée bitumineuse (19) appliquée par stratification sur la couche de maille, une couche adhésive (20) appliquée par stratification sur la surface inférieure de la couche d'asphalte, et une doublure anti-adhésive (18) stratifiée de manière amovible sur la surface inférieure de la couche adhésive,
**caractérisée en ce que**
la couche de maille (12) comporte des fils interconnectés et des noeuds en saillie au niveau des jonctions des fils.

12. Couche sous-jacente de toiture selon la revendication 11, dans laquelle les noeuds débordent d'une surface supérieure de la couche de maille (12).
